# EUROPEAN PATENT APPLICATION

(11) **EP 3 578 335 A1**
(43) Date of publication of application: **11.12.2019**
(21) Application number: 19178455.2
(22) Date of filing: 05.06.2019
(51) Int. Cl.: B29C 49/42, B29C 49/06, B29C 49/28, B29C 49/58, B29C 49/64, B29L 31/00

(54) **APPARATUS FOR GRIPPING AND MOVING PREFORMS/BOTTLES IN A CIRCUIT WITHIN A PLANT FOR PROCESSING PREFORMS FOR THE MANUFACTURING OF BOTTLES**

(30) Priority: 05.06.2018 IT 201800006052
(71) Applicant: Lanfranchi S.r.l., 43044 Collecchio (Parma) (IT)
(72) Inventor: LANFRANCHI, Mario, 43044 Collecchio (PR) (IT)
(74) Representative: Fanzini, Valeriano

(57) **Abstract**

An apparatus for gripping and moving preforms/bottles in particular in a circuit within a plant for processing preforms for the manufacturing of bottles comprising at least one oven and a linear blower, the apparatus comprising a carriage which is mobile in particular by a linear motor on the circuit, a gripping device supported on said carriage, wherein said gripping device comprises one or more mobile members, configured to close on a neck portion of a preform/bottle, where a through opening is defined on said mobile members to allow a fluid passage into the preform through the mouth thereof.

## Description

### FIELD OF APPLICATION OF THE INVENTION

The present finding is in the field of apparatuses to form blowed containers. Said machines are referred to as blowers or blowmolders, and they can generally be of the rotating or linear type. In this case, the field preferably is in the field of linear blowers.

### STATE OF THE ART

Linear blowers for containers of small, medium, or large dimensions starting from a preform are known from the state of the art.

In particular, said blowers are capable of being manufactured from bottles having reduced dimensions (0.25 L) to containers having large dimensions (40 L), also including containers with a wide mouth. The processed containers are generally obtained from materials such as: PET, OPP, PLA, and Multilayer.

Said containers, which will be also generally referred herein below to as bottles, are manufactured starting from a preform obtained by injection in a mould; said preform and the bottle have only the neck in common.

An example of a linear blower generally comprises:
1. A device for supplying and moving preforms;
2. One or more preform heating ovens;
3. A first apparatus for transferring the preforms, having as its object to forward the preforms towards the blowing unit and, simultaneously, to adjust the pitch between the preforms to that of the same blowing unit;
4. A second apparatus for transferring the preforms to the blowing unit and, simultaneously, for transferring the formed bottles towards the outlet;
5. A blowing unit;
6. A third apparatus for transferring the formed bottles to a bottle exiting conveyor.

The state of the art provides that the various components are generally configured as described herein below:
1. The device for supplying and moving preforms comprises a conveyor with guides configured to hold the preforms onto the neck; said guides have to be adjusted according to the change of the neck dimension. Then, the preforms continue into wrenches for the pitch adjustment. Then, the preforms are taken by special mandrels that are configured to insert into the preform mouth.
2. The mandrels introduce the preforms into the oven and move them along a path where they are heated. This step provides that the mandrels are configured to rotate the preforms about the axis thereof for an even distribution of the heat.
3. The first transferring apparatus provides that the preforms are released by the mandrels and taken by special pliers that are configured to hold said preforms once they have come out of the oven and to forward them towards the blowing unit and, simultaneously, adjust the pitch between the preforms to that of the same blowing unit.
4. The second apparatus for transferring the preforms to the blowing unit comprises pliers suitable to hold the bottles on a portion of the neck above the ring. Said pliers are located at the same interaxis distance of the cavities or moulds of the blowing unit.
5. The blowing unit can provide for one or more cavities, each arranged to receive a preform and a seal that can be positioned on the preform mouth through which the fluid for the blowing process is introduced.
6. The third apparatus for transferring the bottles provides, at the end of the blowing step, for taking from the pliers of the second apparatus the bottles exiting the moulds to transfer them onto a special bottle conveyor (chain conveyor belt, air conveyor belt, suctioned conveyor belt, etc.), which is configured to transfer them to the subsequent manufacturing units provided in the plant, such as, for example, buffer, filling machine, capping machine, labelling machine, palletizer, etc.

The rate of the linear blowers is never very high, since the several steps described above involve quite long operative times. Besides the heating and blowing steps, which depend on the type of material used and on the dimensions and shape of the preform/bottle, in the cycle there are times that can be referred to as "down times", since they are not strictly related to the process, but instead to passages and transfers that are required for the handling of the containers in the different steps. Therefore, these "down times" are mainly concentrated in the passage from the first to the second preform transferring apparatus and in the passage from the second to the third bottle transferring apparatus.

### DISCLOSURE AND ADVANTAGES OF THE FINDING

The technical problem underlying the present invention is to provide an apparatus for gripping and moving preforms/bottles in a circuit within a plant for processing preforms for the manufacturing of bottles, which is structurally and functionally devised to overcome one or more of the limitations set forth above with reference to the mentioned prior art.

Within the scope of the above-mentioned problem, one of the main objects of the invention is to develop an apparatus that allows of keep the preform/bottle gripped, without release it into the passage from the oven to the linear blower, and in the same way in the various operative steps of said blower in order to increase the production rate of the machine and to reduce the problems generated by the passage of the preforms/bottles between a gripping organ and the other one, such as falls or jams.

Object of the present invention is also to optimize the change of the format, making it completely automated, thus extremely rapid.

A further object of the invention is also to provide to the art a device for gripping and moving preforms/bottles within the scope of a rational, simple solution.

Such and other objects are achieved by virtue of the characteristics of the invention as set forth in the independent claims. The dependent claims outline preferred and/or particularly advantageous aspects of the invention.

In particular, an implementation form of the present invention provides an apparatus for gripping and moving preforms/bottles in a circuit within a plant for processing preforms for the manufacturing of bottles comprising at least one oven and a linear blower.

The apparatus comprises at least one carriage that is mobile, along the circuit, by a linear motor, and a gripping device supported on said carriage.

In a preferred embodiment said gripping device comprises one or more mobile members configured to close on a neck portion of a preform/bottle and to hold it between the mouth and above the ring.

The gripping device preferably has a through opening defined in said one or more mobile members to allow a fluid passage into the preform through the mouth thereof.

Another aspect of the invention is to provide a gripping device that is rotatable according to an axis substantially coincident with the axis of symmetry of the preform/bottle that is being held.

By virtue of this solution, an increase of the production rate of the linear blower is provided for, getting closer to the higher rates of the blowers rotative.

The rate increase is due to both the use of linear motors and to the fact of never releasing the preform, which therefore remains always retained by the gripping device during al the operative steps, from the entrance of the preform to oven, until the exiting of the bottle from the blower.

By virtue of the rotatable gripping device, the preform/bottle can be rotated, which is generally required when the preforms pass into the oven so as to allow a heating uniformity of said preforms.

In order to carry out said rotation, the gripping device preferably provides for means that are configured to mechanically engage on corresponding counter-means located on the circuit.

A further advantage of this solution is given by the fact that it can be applied to the conventional blowers without involving modifications and interventions to the blowing system, hence to the machine core.

Object of the present invention is also to adapt the gripping device to the different dimensions of the neck for an automatization of the format change.

In fact, an aspect of the finding further provides that the apparatus for gripping and moving preforms/bottles comprises an actuating device of the mobile members to drive the opening/closure thereof on the neck of the preform/bottle, where said actuating device is preferably configured to carry out the opening/closure of the mobile member of the gripping device in a plurality of configurations to allow varying the opening/closure dimension as a function of the diameter of the neck of the preform/bottl e.

A possible embodiment provides that the actuating device comprises a driving member configured to receive an activation signal provided by an activation station of the plant and such that the actuating device is of the non-reversible type.

Therefore, the opening/closure position of the mobile member of the gripping device is maintained up to the subsequent activation station of the plant.

An alternative to said embodiment provides that the actuating device comprises a driving member configured to autonomously activate by an activation signal provided by a programmable control unit and without the need to interface with an activation station. Therefore, the opening/closure of the mobile members can be carried out in any position of the plant.

In order to reduce the problems arising from the transfer of the preform, such as falls, jams, etc., and to further optimize the production rate of the linear blower, the gripping device is configured so as to not release the preform to other devices within the linear blower, and thus, according to a preferred embodiment, it is devised to directly interface with the seal and the forming mould.

Therefore, in a formulation of the present finding, the gripping device comprises an abutment surface that is configured to sealingly interface with a seal of the blower, said abutment surface being translatable in a vertical direction under the action of a top-down force exerted by the seal of the blower.

By virtue of possible contrast means configured to oppose the vertical translation of the abutment surface, the gripping device can adapt more to the seal and the forming mould, and it can come back to its initial position, once the blowing step has been completed, and therefore once it has been released from the seal and the mould.

Said objects and advantages are all achieved by the apparatus for gripping and moving preforms/bottles in a circuit within a plant for processing preforms for the manufacturing of bottles, which is the subject matter of the present finding, that is characterized in what is provided for in the claims set forth herein below.

### BRIEF DESCRIPTION OF THE FIGURES

This and other characteristics will be more clearly explained by the following description of some embodiments that are illustrated by way of non-limiting example in the attached drawing tables.
- Fig. 1: illustrates an example of circuit of the processing plant for the manufacturing of bottles starting from preforms.
- Fig. 2: illustrates a sectional view of an apparatus for gripping and moving preforms and/or bottles.
- Figs. 3a and 3b: illustrate a detail of the gripping device interfacing with the seal and the forming mould of a linear blower.

### DESCRIPTION OF THE FINDING

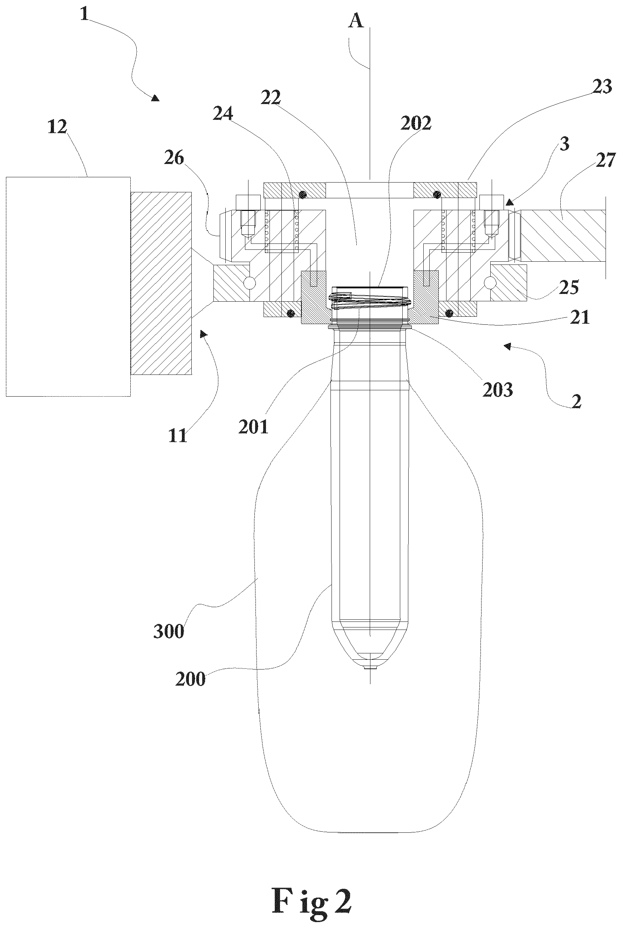

With particular reference to Fig. 2, an apparatus 1 for gripping and moving preforms 200 and/or bottles 300 is shown. Said preforms 200 and/or bottles 300 are treated within a plant 100 of treatment for the manufacturing of bottles 300 starting from preforms 200.

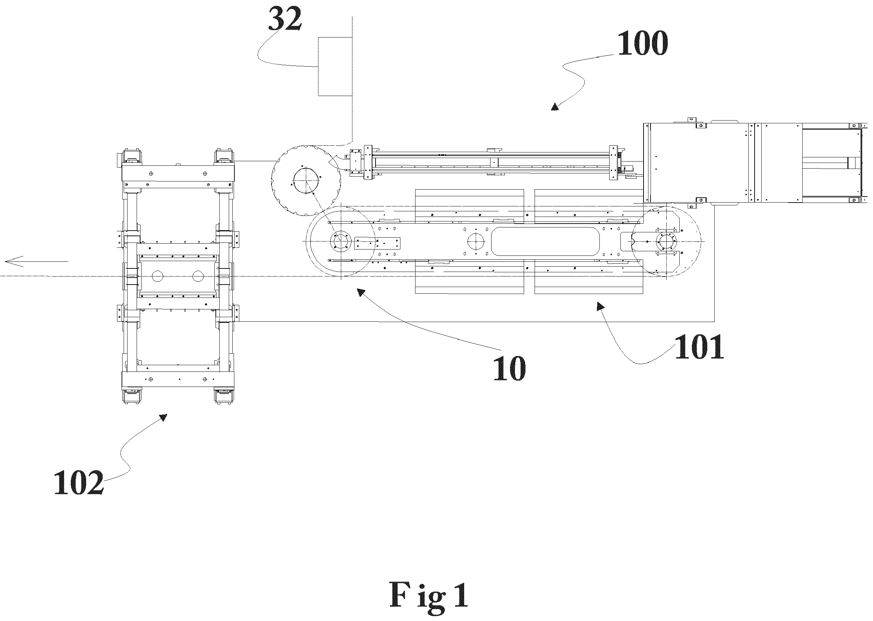

In a formulation of the present finding, and as represented in Fig. 1, the plant 100 comprises at least one oven 101 and a linear blower 102 and a circuit 10.

By the term circuit 10, it is meant the path along which first the preforms, then the bottles are moved during the treatment thereof through the oven 101 and the blower 102.

In accordance with an aspect of the invention, the moving of the preforms 200 and the bottles 300 takes place by means of linear motors.

The linear motors commercially available generally comprise a mobile magnet or cursor housing the electrically supplied coils and a linear sequence of magnetic plates or fixed permanent magnets. The mobile magnet is positioned above said linear sequence of magnetic plates with an alternated polarity so that the mobile magnet is always in such a position as to be attracted by the subsequent magnet, in the motion direction, and repelled by the preceding one. The linear motors can mainly be of two types:
- having a unilateral structure: these are linear motors composed of a track of modular magnetic plates and a cursor. This structure offers the best performance in terms of thrust and operation stability, by virtue of the excellent chance to evacuate the heat that is generated; however, this is not the best solution for systems with high dynamics.
- having a bilateral structure: these are linear motors where the cursor runs between the magnetic plates, i.e., the mobile part moves inside a "U"-shaped structure where the magnetic plates compose the vertical walls. This structure offers the best performance for applications where strong accelerations are required. In contrast, the very closed structure does not promote the dissipation of heat, and this does not allow using high currents, i.e., reaching high values of thrust.

Generally, the advantages of the linear motors in the implementation of moving systems are mainly related to the fact that, besides being low inertia devices, they do not need coupling/reduction/motion transmission systems such as belts, chains, or the like, but they are controlled directly by their own drive, constituting a direct actuation with easy management and maintenance.

Therefore, inertial phenomena are almost absent, which are instead characteristic of the mechanics of transmission of the motion with a conventional rotation motor, which involves, over time, problems of wear and loss of precision. Furthermore, by virtue of the linear motors, it is possible to reach high speeds and strong accelerations, which considerably increase productivity, thus allowing considerable cycle time savings.

In the following of the description, the terms carriage 11 and linear motor 12 will be used to define the mobile magnet and the linear sequence of fixed magnetic plates, respectively.

In accordance with a characteristic of the present finding, the linear motor or the linear motors 12 extend along the circuit 10, defining the path of the preforms 200 and/or bottles 300.

Since the magnetic plates are generally modular, they allow a great flexibility in manufacturing the circuit 10.

According to an aspect of the invention, the apparatus 1 for gripping and moving preforms 200 and/or bottles 300 comprises a carriage 11 that is mobile by a linear motor 12 on the circuit 10, and it comprises a gripping device 2 supported on said carriage 11.

The apparatus 1 is configured to supply the preforms 200 to the oven 101, in order to move them within the oven 101 during the heating step, then to supply said preforms 200 to the blower 102, to move them, within the blower 102 during the blowing step, and finally to bring the bottles 300 thus manufactured from the blower 102 to a possible subsequent treatment station.

The gripping device 2 is configured to allow that, during the movement and in the various operative steps described above, the preform 200 and/or bottle 300 is never released. By virtue of this solution, it is possible to increase the production rate of the plant 100 and to reduce the problems generated by the passage of the preforms 200 and/or bottles 300 between a gripping element and the other one, such as falls or jams.

It should be noted that the preform 200 and the bottle 300 have the neck 201 in common. By the term neck 201, it is meant that portion of the preform/bottle 200, 300 encompassed between a mouth 202, i.e., the opening of the preform/bottle 200, 300, up to below a ring 203, i.e., an annular portion defining a thickening of the neck.

According to a preferred embodiment, the gripping device 2 comprises one or more mobile members 21 configured to close on a neck portion 201 of a preform/bottle 200, 300 and to hold it in a region encompassed between the mouth 202 and the ring 203.

Preferably, the gripping device 2 has a through opening 22 defined in said one or more mobile members 21 to allow a fluid passage into the preform 200 through the mouth 202 thereof.

Since the mobile members 21 of the gripping device 2 are configured to close on a neck portion 201, this allows to always keeping the preform/bottle 200, 300 gripped during the various treatment steps, since the neck 201 is the only part of the preform 200 that does not undergo changes during the treatment per the manufacturing of the bottle 300.

Furthermore, the through opening 22 defined in said one or more mobile members 21 allows once again that the preform is not released during the blowing step into the blower 102, since said through opening 22 is configured to interface with a blowing seal 5 of the blower 102 and to allow a fluid passage into the preform 200, through the mouth 202 thereof.

The fact that the mobile members 21 are configured to hold the preform/bottle 200, 300 above the ring 203 also cooperates to the aim of allowing a continued grip.

In fact, leaving the portion of the preform 200 free below the ring 203 the gripping device 2 does not interfere with a forming mould 6 of the blower 102, which, during the blowing step, has to contact said lower surface of the ring 203.

The mobile members 21 can provide for different implementation forms, easily definable by those skilled in the art.

In particular, in Fig. 2, said mobile members 21 are represented as two mobile members with an opening that is shrinkable by a translation approaching to or moving away from the neck 201 of the preform/bottle 200, 300, but a further embodiment could provide, for example, also a single mobile member with an opening that is shrinkable by a rotation about a fulcrum.

However, what has been represented has a non-limiting, exemplary value, therefore any variations which may provide, for example, a stationary and a mobile member, or two translating or rotating distinct mobile members, are considered henceforth falling within the same protection scope.

According to a preferred embodiment, and as it will be set forth in more detail herein below, the apparatus 1 further comprises an actuating device 3 to drive the opening/closure on the neck 201 of said mobile members 21.

Said actuating device 3, is a type that is known to those skilled in the art, and it can be of a pneumatic, electrical-mechanical, hydraulic type, etc.

A possible embodiment provides that the actuating device 3 is always connected to the energy source that causes its activation, i.e., electrical, pneumatic, or hydraulic energy along the entire circuit 10 of the plant 100.

Therefore, the opening/closure of the mobile members 21 can be carried out in any position of the plant 100, since the actuating device 3 is configured to activate itself by an activation signal provided by a programmable control unit.

In accordance with a possible alternative embodiment, the actuating device 3 comprises a driving member 31, not represented in the figure, which is configured to receive an activation signal provided by an activation station 32 of the plant 100.

This embodiment provides that, in the moment when the apparatus 1 interfaces with said activation station 32, the latter transmits a signal to the driving member 31 in order to actuate the pneumatic/electrical/hydraulic connection and to allow the status change of the actuating device 3 and consequently the opening/closure of the mobile members 21.

In accordance with a characteristic of the present finding, the actuating device 3 is of a non-reversible type.

By virtue of such configuration, the mobile members 21 remain in the opening/closure position defined by the signal that the activation station 32 transmits to the driving member 31, and they can change their opening/closure status only by interfacing with said activation station 32.

In fact, this configuration provides that the actuating device 3 is connected to the energy source that generates the activation thereof, i.e., electrical, pneumatic or hydraulic energy, only when it interfaces with the activation station 32.

To this aim, safety members, such as check valves or mechanical stops, which prevent an uncontrolled opening of the mobile members 21, can also be provided.

In accordance with an aspect of the invention, the actuating device 3 is configured to carry out the opening/closure of the mobile member 21 of the gripping device 2 in a plurality of configurations to allow varying the opening/closure dimension as a function of the diameter of the neck 201 of the preform/bottle 200, 300.

By virtue of this solution, the format change is optimized when the preforms 200 to be treated have necks 201 having different dimensions.

In fact, this allows automatically adapting the dimension of the gripping device 2 to the dimension of the neck 201. Said automatic adjusting can occur in different manners, such as, for example, by means of a recipe inserted into the programmable control unit, which manages the actuating device 3, or directly by means of a torque control of the actuating device 3, preferably if it is of the electrical type, or by controlling the pressure, if it is of the pneumatic or hydraulic type. However, it is understood that said examples do not limit the possible solutions that those skilled in the art may identify.

The easiness in changing the format is also achieved by virtue of the fact that the gripping device 2 is supported on the carriage 11, which is mobile by a linear motor 12. In fact, the same configuration of the linear motors 12 allows to said carriages 11 automatically change the distance/pitch between them, hence between the corresponding gripping devices 2. Consequently, the flexibility in managing preforms 200 or bottles 300 having different dimensions is completely ensured.

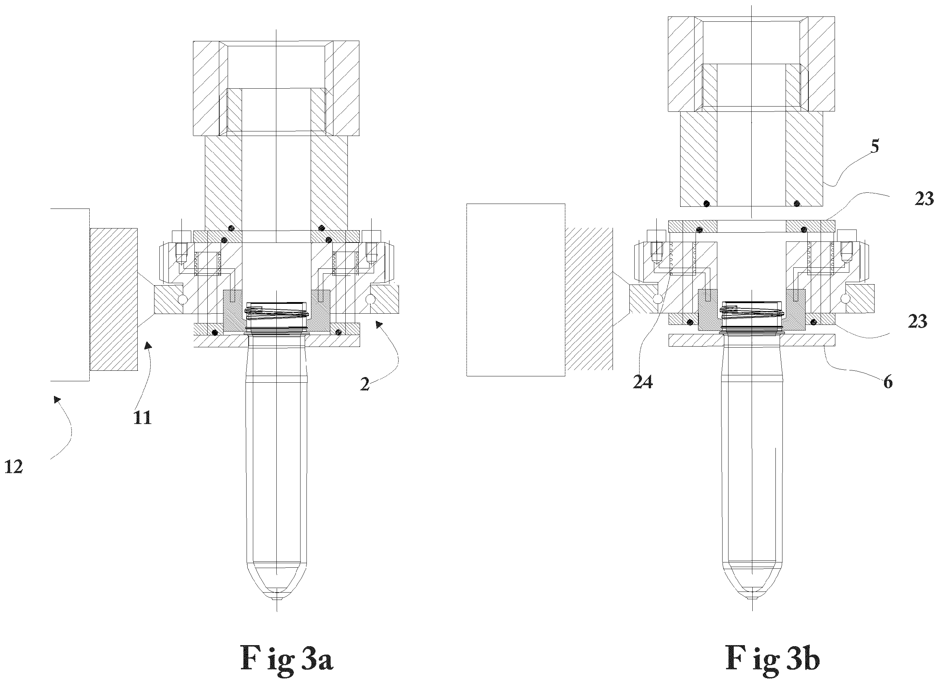

According to a further aspect of the invention the gripping device 2 as represented in Figs. 3a and 3b comprises an abutment member 23 configured to sealingly interface with the seal 5 of the blower 102.

Said abutment member 23 is further configured to sealingly interface with the forming mould 6 of the blower 102.

Said abutment member 23 is translatable in a vertical direction under the action of a top-down force exerted by the seal 5 of the blower 102.

In order to deal with such force, the gripping device 2 preferably comprises contrast means 24 configured to oppose the vertical translation of the abutment member 23.

Said contrast means 24 can be configured according to different implementation forms, for example, they can be means of the pneumatic type, or spring means, etc.

In Fig. 3a and 3b, the abutment member 23 is shown in the two positions it takes:
- Fig. 3a represents the abutment member 23 in the position taken during the blowing step.
- Fig. 3b represents the abutment member 23 in the position taken before/after the blowing step. In view of this solution, the gripping device 2 that is interposed between the seal 5 and the forming mould 6 fits to the seal 5 and the mould 6, ensuring the necessary sealing upon performing the blowing step.

By virtue of this solution, an increase of the production rate of the linear blower 102 is provided for, approaching to the higher production rates of the rotating blowers.

The increase in the rate is due to the fact that the preform 200 is never released, which preform therefore remains always held by the gripping device 2.

In this manner, the following steps are eliminated: opening of the gripping device and release of the preform 200 in a blowing position, closure of the gripping device and for gripping the bottle 300, which are typical of a linear blower of the prior art.

Advantageously, tenth of a second are regained, which increases the rate.

Exactly in order to allow interfacing with the blower 102, the apparatus 1 provides that the linear motor 12 and the respective carriage 11 are preferably located laterally to the preform/bottle 200, 300.

In such a manner, the linear motor 12 and the respective carriage 11 do not interfere with the seal 5 of the blower 102, and they allow access to the mouth 202 of the preform/bottle 200, 300 for the blowing.

Similarly, the side position also allows leaving a free space below the preform/bottle 200, 300 so as not to interfere with the mould 6.

Therefore, the complete access and function of the apparatus 1 in the blower 102 are ensured.

According to another aspect of the invention, the gripping device 2 is rotatable according to an axis A substantially coincident with the axis of symmetry of the preform/bottle 200, 300 that is being held. In this manner, the gripping device 2, and consequently the preform/bottle 200, 300 can be rotated when required. In particular, this rotation generally occurs within the oven 101 to allow the uniformity of heating of the preform 200.

In accordance with a further possible embodiment, the gripping device 2 further comprises means 26 configured to mechanically engage on corresponding counter-means 27 located along the circuit 10 for the rotation thereof with respect to a support 25 with a cushion of the apparatus.

Said means and corresponding counter-means can be implemented in several ways, such as, for example, pinion/crown meshing with a rack, a wheel in contact with a friction surface, pulley meshing on a belt, etc.

Generally, it is necessary to put the preform 200 in rotation when it passes within the oven 101 so as to allow a uniformity of heating of said preforms 200.

However, it is intended that what has been described above is of a non-limiting, exemplary value; therefore, any detail variations that would be necessary due to technical and/or functional reasons are as of now considered to fall within the same protection scope defined by the claims set forth herein below.

## Claims

1. An apparatus (1) for gripping and moving preforms/bottles (200,300) in particular in a circuit (10) within a plant (100) for processing preforms (200) for the manufacturing of bottles (300) comprising at least one oven (101) and a linear blower (102), the apparatus (1) comprising a carriage (11) which is mobile in particular by a linear motor (12) on the circuit (10), a gripping device (2) supported on said carriage (11), wherein said gripping device (2) comprises one or more mobile members (21), configured to close on a neck portion (201) of a preform/bottle (200, 300), where a through opening (22) is defined on said mobile members (21) to allow a fluid passage into the preform (200) through the mouth (202) thereof.

2. The apparatus (1) for gripping and moving preforms/bottles (200,300) according to claim 1, wherein the multiple mobile members (21) are configured to hold the preform/bottle (200,300) in a region encompassed between a mouth (202) and a ring (203) of the preform/bottle (200,300).

3. The apparatus (1) for gripping and moving preforms/bottles (200,300) according to claims 1 or 2, wherein the gripping device (2) is rotatable according to an axis (A) substantially coincident with the axis of symmetry of the preform/bottle (200,300) that is being held.

4. The apparatus (1) for gripping and moving preforms/bottles (200,300) according to any one of the preceding claims, further comprising an actuating device (3) of said mobile members (21) to drive the opening/closure thereof on the neck (201).

5. The apparatus (1) for gripping and moving preforms/bottles (200,300) according to claim 4, wherein the actuating device (3) comprises a driving member (31) configured to receive an activation signal provided by a respective activation station (32) of the plant (100).

6. The apparatus (1) for gripping and moving preforms/bottles (200,300) according to claims 4 or 5, wherein the actuating device (3) is of the non-reversible type.

7. The apparatus (1) for gripping and moving preforms/bottles (200,300), according to one of the claims 4 to 6, wherein the actuating device (3) is configured to carry out the opening/closure of the mobile member (21) of the gripping device (2) which is mobile in a plurality of configurations to allow varying the opening/closure dimension as a function of the diameter of the neck (201) of the preform/bottle (200,300) .

8. The apparatus (1) for gripping and moving preforms/bottles (200,300) according to one of the claims 1 to 4, wherein the gripping device (2) comprises an abutment member (23) configured to sealingly interface with a seal (5) of the blower (102).

9. The apparatus (1) for gripping and moving preforms/bottles (200,300) according to claim 8, wherein the abutment member (23) is configured to sealingly interface with a forming mould (6) of the blower (102).

10. The apparatus (1) for gripping and moving preforms/bottles (200,300), according to claim 8 or 9 wherein the abutment member (23) is translatable in a vertical direction under the action of a top-down force exerted by the seal (5) of the blower (102).

11. The apparatus (1) for gripping and moving preforms/bottles (200,300), according to one of the claims 8 to 10, wherein the abutment member (23) comprises contrast means (24) configured to oppose the vertical translation of the abutment member (23).

12. The apparatus (1) for gripping and moving preforms/bottles (200,300) according to any one of the preceding claims, wherein the gripping device (2) further comprises means (26) configured to mechanically engage on corresponding counter-means (27), located on the circuit (10), for the rotation thereof with respect to a support (25) with a cushion of the apparatus (1).

13. The apparatus (1) for gripping and moving preforms/bottles (200,300) according to one of the preceding claims, wherein the linear motor (12) and the respective carriage (11) are located laterally to the preform/bottle (200,300) so as to leave a free space over and under said preform/bottle (200,300).

14. A plant (100) for processing preforms (200) for the manufacturing of bottles (300) comprising a circuit (10), at least one oven (101), a linear blower (102) and the apparatus (1) according to any one of the preceding claims.
